# EUROPÄISCHE PATENTANMELDUNG

(11) **EP 4 276 382 A1**
(43) Veröffentlichungstag der Anmeldung: **15.11.2023**
(21) Anmeldenummer: 22172283.8
(22) Anmeldetag: 09.05.2022
(51) Int. Cl.: F24S 25/33, F24S 25/61, F24S 25/636, E04B 2/96

(54) **MONTAGEELEMENT, EINLEGEPROFIL UND MONTAGESYSTEM**

(71) Anmelder: S:FLEX GmbH Hamburg, 21029 Hamburg (DE)
(72) Erfinder: Wolff, Lutz, 17268 Milmersdorf (DE)
(74) Vertreter: ETL IP Patent- und Rechtsanwaltsgesellschaft mbH

(57) **Zusammenfassung**

Die Erfindung betrifft ein Montageelement (10), ein Einlegeprofil (20) und ein Montagesystem (30) zur Anordnung eines flachen Körpers (31), wie ein Photovoltaikmodul, ein Solarthermiemodul oder ein Fassadenelement an einem Gebäude. Erfindungsgemäß ist vorgesehen, dass der flache Körper (31) auf einer Hubkörperoberseite (12) des Montageelements (10) aufliegt, eine Feder (2) des Montagelements (10) in eine Nut (21) des Einlegemoduls (20) eingreift und das Justierelement (3) derart positioniert ist, dass ein Abstand zwischen Hubkörperoberseite (12) und einer Unterseite eines ersten Schenkels (22) des Einlegprofils einer Höhe des Körpers (31) entspricht.

## Beschreibung

Die Erfindung betrifft ein Montageelement und Einlegesystem zum Fixieren eines plattenförmigen Fassadenelements, Photovoltaikmoduls, Solarthermiemoduls oder ähnlichem in einem Einlegeprofil, sowie ein Montagesystem mit einem solchen.

Photovoltaik- und Solarthermiemodule, aber auch Fassadenelemente werden beispielsweise mit Klemmen auf einer mit Fassade oder Gebäudedach verbundenen Unterkonstruktion befestigt. Die Klemmen umfassen dabei den Rahmen des Moduls oder des Fassadenelements und werden mit der Unterkonstruktion verschraubt. Diese Verbindung ist sehr stabil und rigide. In der Folge kann eine thermische Ausdehnung oder Schrumpfung der einzelnen Komponenten infolge von Temperaturschwankungen, insbesondere beim Wechsel der Jahreszeiten zu Stabilitätsproblemen und Beschädigungen, wie Mikrorissen, Zell- und Glasbruch der Module führen. Zudem sind die Klemmen stets bei Aufsicht auf das System sichtbar und können somit den ästhetischen Eindruck stören.

Alternativ zu Klemmen werden daher Einlegesysteme verwendet. Diese zeichnen sich mindestens durch ein U-Profil aus, welches auf die äußere Form eines Moduls abgestimmt ist. Bei der Montage wird ein Modul dann zwischen zwei parallel zueinander angeordneten Einlegeprofilen eingelegt. Der Vorteil dieser Systeme liegt zum einen in der optisch gleichmäßigen Oberfläche, da keine den Rahmen umfassenden Klemmen zur Befestigung benötigt werden. Mithin ist die Montage stark vereinfacht und daher die Montagezeit verkürzt. Ferner sind die Module in den Einlegeprofilen schwimmend verlegt, so dass thermische Ausdehnungen durch das System selbst ausgeglichen werden können.

Nachteilig ist jedoch, dass die Einlegeprofile stets nur zur Aufnahme eines darauf abgestimmten Typs von Modulen mit definierter Rahmenhöhe geeignet sind. Aufgrund der nötigen Toleranzen, die bei der Produktion der Module gegeben sind, weisen die Module im System häufig zu viel Spiel auf, was bei Wind zu Geräuschbildung, wie etwa Klappern, führen kann.

Aufgabe der Erfindung ist es nun, die Nachteile des Stands der Technik zu beseitigen oder zumindest zu mildern. Insbesondere soll ein System bereitgestellt werden, welches die Vorteile beider bekannten Systeme, wie die schwimmende Lagerung und die Reduktion von Geräuschen vereint.

Diese Aufgabe wird durch ein Montageelement, ein Einlegeprofil und ein Montagesystem mit den Merkmalen der unabhängigen Ansprüche gelöst.

Somit betrifft ein erster Aspekt der Erfindung ein Montageelement zum Fixieren eines plattenförmigen Körpers in einem Einlegeprofil, wobei das Montageelement eine Klemmplatte, einen Hubkörper und ein Justiermittel aufweist. Der Hubkörper weist seinerseits eine Hubkörperoberseite auf, die ausgebildet ist eine Unterseite eines plattenförmigen Körpers aufzunehmen. Bei dem plattenförmigen Körper handelt es sich bevorzugt um ein Photovoltaikmodul, ein Solarthermiemodul oder ein Fassadenelement (im Weiteren insgesamt als Modul bezeichnet).

Das Justiermittel steht mit dem Hubkörper und der Klemmplatte in Wirkverbindung, so dass der Hubkörper und die Klemmplatte mittels dem Justiermittel miteinander verbunden sind. Das Justiermittel ist erfindungsgemäß derart ausgebildet, dass durch dessen Verstellung, insbesondere durch Drehung ein Abstand zwischen Klemmplatte und Hubkörperoberseite variierbar ist. Dies ermöglicht einen Hub der Hubkörperoberseite gegenüber der Klemmplatte.

Erfindungsgemäß weist die Klemmplatte an einer ersten Seite des Hubkörpers außerhalb einer Flucht des Hubkörpers einen Eingriffsabschnitt, insbesondere in Funktion einer Feder auf, der ausgebildet ist in eine Längsnut eines Einlegeprofils einzugreifen. Dies ermöglicht, dass bei bestimmungsgemäßem Gebrauch des Montageelements die Klemmplatte bei Eingriff in ein Einlegeprofil eine Position des Montagemittels in Bezug auf eine Höhe des Einlegeprofils definiert. Die Betätigung des Justiermittels und damit die Einstellung eines Hubs der Hubkörperoberseite in Bezug auf die Klemmplatte, verursacht mithin einen Hub der Hubkörperoberseite in Bezug auf das Einlegeprofil. Somit ist bei bestimmungsgemäßem Gebrauch ein Abstand zwischen einer Oberseite des Einlegeprofils und der Hubkörperseite einstellbar. Liegt auf der Hubkörperoberseite ein plattenförmiger Körper auf, ist der Abstand derart einstellbar, dass er der Höhe des Körpers entspricht. Folglich sind mittels des erfindungsgemäßen Montageelements plattenförmige Körper verschiedener Höhe derart in einem Einlegeprofil fixierbar, dass eine optimale Klemmung der Körper im Profil erreichbar ist. Die ermöglicht, dass die Wahl des Einlegeprofils flexibler ist und beispielsweise beim Bau einer Photovoltaikanlage einheitlich ein Typ von Einlegeprofilen verwendet werden kann, auch wenn die Module unterschiedliche Rahmenhöhen oder Toleranzen aufweisen, ohne dass zusätzliche Adapter nötig sind. Bei der Montage wird das Modul zunächst in das Einlegeprofil eingelegt. Die verstellbaren Modulklemmen werden unter den Modulrahmen des Moduls geschoben.

Beim Klemmvorgang wird das Modul mit den Modulklemmen von der Rahmenrückseite an das Einlegeprofil gedrückt und dabei in der Lage gesichert. Auf diese Weise entsteht kein Spalt zwischen Einlegeprofil und Modulrahmen. Das verhindert ungewollte Geräusche wie Klappern bei starkem Wind. Die Modulklemmen dienen auch als Abstandshalter, zum einen, um den Aufwand bei Wartung und Montage zu verringern. Sie fungieren gleichzeitig auch als Gleitlager, die thermisch bedingte Längenänderungen ausgleichen und damit Glasbrüche oder Mikrorisse in den Solarzellen minimieren.

Zudem erfolgt die Klemmwirkung durch das Montageelement stets von einer Unterseite des plattenförmigen Körpers, der von unten an eine obere Schiene des Einlegeprofils geklemmt wird.

Es ist im Gegensatz zu herkömmlichen Klemmen nicht erforderlich, dass das Montageelement, die Klemme den Körper umgreift beziehungsweise von oben auf diesen wirkt. Somit ist das erfindungsgemäße Montageelement im verbauten Montagesystem in Aufsicht nicht sichtbar. Mithin entsteht ein homogenes und einheitliches Bild.

Bevorzugt weist der Eingriffsabschnitt ein Profil auf, welches zumindest an einem vom Hubkörper abgewandten Ende eine Abwinkelung aufweist und somit einen L- förmigen Querschnitt aufweist. Dies dient dem Eingreifen des Eingriffsabschnitts in eine entsprechend geformte Nut. Ferner bevorzugt weist der Eingriffsabschnitt eine längserstreckte Rille auf, welche auf einer dem L-Schenkel abgewandten Seite des Eingriffsabschnitts ausgebildet ist. Diese Rille kann auf der gegenüberliegenden Oberfläche der Klemmplatte zu einer äquivalenten Erhebung führen und dient einer in Bezug auf die Tiefe des Eingriffsabschnitts definierten Positionierung. Dadurch ist das Einhalten eines definierten Abstands vom Hubkörper zum Einlegeprofil gewährleistet.

In bevorzugter Ausgestaltung der Erfindung ist vorgesehen, dass auf der Hubkörperoberseite ein Abstandselement, insbesondere in Form einer Erhebung oder eines Vorsprungs ausgebildet oder angeordnet ist. Dies ermöglicht eine Positionierung des plattenförmigen Körpers, wobei die Erhebung als Anschlag fungiert. Die Erhebung ist bevorzugt als, insbesondere symmetrische Nase ausgebildet und bevorzugt mittig auf der Hubkörperoberseite angeordnet. Vorteilhaft erstreckt sich die Erhebung parallel zur zweiten Seite des Hubkörpers über die gesamte Breite der Hubkörperoberfläche und weist zur Hubkörperoberfläche lotrecht verlaufende Kanten auf. Dies ermöglicht einen definierten Anschlag und verhindert, dass der plattenförmige Körper über die Nase rutscht.

Bevorzugt weist der Hubkörper eine lotrecht zur Hubkörperoberseite angeordnete und diese durchstoßende Durchgangsöffnung zur Aufnahme beziehungsweise Durchführung des, insbesondere eine Gewindestange aufweisenden Justiermittels auf.

Mit Vorteil weist der Hubkörper ein Kastenprofil auf, dessen Oberseite eine Durchgangsöffnung zur Aufnahme des Justiermittels aufweist, oder besteht aus einem solchen. Die Ausgestaltung als Kastenprofil ermöglicht eine gewichtsoptimierte Ausgestaltung, die bei der Fertigung und dem Verbau von Fassadensystemen und Dachaufbauten aufgrund der zu beachtenden Statik vorteilhaft ist. Ferner ist bevorzugt, dass der Hubkörper als Stangenpressteil gefertigt ist, da dies zudem eine kosten- und zeitoptimierte Herstellung ermöglicht.

Weiter ermöglicht die Ausgestaltung als Kastenprofil, dass sich die Klemmplatte innerhalb des Hubkörpers parallel zur Hubkörperoberseite erstreckt. Alternativ ist die Klemmplatte unterhalb, also auf einer von der Hubkörperoberseite abgewandten Seite des Hubkörpers angeordnet. Dabei bietet jedoch die erstgenannte Variante der Anordnung innerhalb des Kastenprofils aufgrund der seitlichen Führung durch die erste und zweite Seite des Hubkörpers Stabilitätsvorteile.

In bevorzugter Ausgestaltung der Erfindung ist vorgesehen, dass das Justiermittel ein Gewinde und ein, insbesondere selbstsicherndes Gegenstück aufweist. Dies ermöglicht einen stufenlos einstellbaren Abstand zwischen Hubkörperoberseite und Klemmplatte, beziehungsweise Hubkörperoberseite und einem Schenkel des Einlegeprofils und mithin eine stufenlose Anpassung an die Höhe des plattenförmigen Körpers.

Mit Vorteil ist das Gegenstück des Justiermittels als selbstsichernde Mutter ausgebildet, da somit ein definiertes Anziehmoment vorbestimmbar ist, ohne, dass sich die Mutter vom Gewinde löst und damit die Klemmung reduzieren würde. Dadurch ist bereits ein leichtes Anziehen, welches insbesondere thermische Ausdehnung des plattenförmigen Körpers zulässt, ohne Spannung im Körper oder dem Montagesystem zu erzeugen. Im Gegensatz zu normalen Sechskantmuttern hat die selbstsichernde Mutter einen einseitig eingesetzten Ring aus Kunststoff, der sich beim Anziehen an die Schraube anschmiegt und so ein selbständiges Lösen z.B. durch Vibration verhindert.

In einer weiter bevorzugten Ausgestaltung der Erfindung ist vorgesehen, dass der Hubkörper an einer gegenüber der Hubkörperoberseite angeordneten Hubkörperunterseite einen Rücksprung mit einer Durchgangsöffnung zur Aufnahme des Justiermittels aufweist. Der Rücksprung ermöglicht die Aufnahme eines Gegenstücks zum Justierelement, beispielsweise einer selbstsichernden Mutter, einer Gewindeplatte und oder eines elastischen Elements.

Bevorzugt weist der Rücksprung zudem Überstand auf, so dass der durch den Rücksprung freiwerdende Raum zu einem definierten Teil durch den Überstand überragt wird. Dies ermöglicht eine Fixierung des Gegenstücks des Justierelements, also beispielsweise einer Mutter auch dann, wenn das Justierelement vollständig aus dem Gegenstück herausgenommen wird. Mit anderen Worten führt auch ein vollständiges Herausdrehen einer Schraube aus der Mutter nicht dazu, dass die Schraube Schwerkraft bedingt aus dem Rücksprung herausfällt.

Alternativ oder zusätzlich ist das Gegenstück zum Gewinde des Justierelements in der Durchgangsöffnung des Rücksprungs der Hubkörperunterseite oder der Durchgangsöffnung der Klemmplatte angeordnet. Um ein selbstständiges Lösen des Justiermittels zu verhindern, kann vorgesehen sein ein elastisches Material, insbesondere einen Kunststoff an einen Ausgang der Durchgangsöffnung anzuordnen. Ist das Gegenstück als Platte oder elastisches Material ausgebildet oder weist ein solches auf, und ist im Rücksprung angeordnet, kann eine Lagestabilisierung des Kunststoffs, der Platte, einer Schraube oder Ähnlichem dadurch erfolgen, dass dieses formschlüssig in den Rücksprung eingebracht ist und somit eine Rotation des Gegenstücks durch den Formschluss verhindert wird. Dies hat insbesondere den Vorteil, dass durch die Fixierung des Gegenstücks gleich welcher Ausführung bei Einstellung, bzw. Fixierung des Justierelements, also beispielsweise beim Festziehen der Schraube kein aktives Gegenhalten durch den Monteur und kein zusätzliches Werkzeug notwendig wird. Vielmehr erfolgt die Einstellung des Systemelements, bzw. das Einklemmen des Moduls aus einer Richtung, nämlich durch Eingriff in das Systemelement, beispielsweise über einen Schraubenkopf mit einem geeigneten Werkzeug aus Richtung der Kastenprofiloberseite.

Mit besonderem Vorteil weist eine zur ersten Seite und zur Hubkörperoberfläche benachbarte Seite des Hubkörpers in einem zur Hubkörperoberseite benachbarten Abschnitt ein Profil auf, welches insbesondere parallel zueinander und zur Hubkörperoberseite verlaufende Erhebungen und Vertiefungen aufweist. Der Abschnitt kann von einer Oberfläche der Seite beabstandet sein und ist dann bevorzugt von der Hubkörperoberfläche zur zweiten Seite hingeneigt oder gebogen, insbesondere parallel zu dieser angeordnet. Der Vorteil dieser Ausgestaltung liegt in einer weiteren Funktionalisierung des Montageelements. Beispielsweise dient der Abstand als Gegenstück zur Erzeugung einer Rastverbindung, beispielsweise für ein Abschlussprofil.

Bevorzugt ist die Breite des profilierten Abschnitts im Bereich von einem Drittel bis einem Ganzen der Hubhöhe des Hubkörpers. Damit wird sichergestellt, dass die Funktion des formschlüssigen Eingreifens in ein Abschlussprofil auch bei unterschiedlichen Hubhöhen gegeben ist, ohne, dass eine andere Ausrichtung oder gar ein anderer Typ eines Abschlussprofils erforderlich ist.

Bevorzugt weist auch eine der zweiten Seite gegenüberliegenden Seite einen solchen, insbesondere identischen Abschnitt auf. Dies dient der Praktikabilität, da dann das Montageelement an jedweder Stelle im Montagesystem eingesetzt werden kann. Ist der Abschnitt nur an einer Seite ausgebildet, wird diese Seite bei bestimmungsgemäßem Gebrauch derart ausgerichtet, dass sie nicht vom plattenförmigen Körper überragt wird.

Ein weiterer Aspekt der Erfindung betrifft ein Einlegeprofil zur Aufnahme eines plattenförmigen Körpers und eines erfindungsgemäßen Montageelements. Das Einlegeprofil weist einen längserstreckten Körper mit mindestens U-förmigem Querschnitt mit einem durch einen Steg verbundenen ersten und zweiten Schenkel auf. Erfindungsgemäß ist an dem zweiten Schenkel zumindest eine Längsnut zur Aufnahme einer Feder ausgebildet. Unter mindestens U-förmig ist vorliegend zu verstehen, dass dies auch weitere Profile einschließt, die in einem Teilbereich einen U-förmigen Querschnitt aufweisen. Mit anderen Worten umfasst beispielsweise ein Doppel-T-Profil zwei U-förmige Querschnitte, deren Steg identisch ist.

Bevorzugt ist die Nut derart geformt, dass sie den Eingriffsabschnitt der Klemmplatte des erfindungsgemäßen Montageelements aufnehmen kann. Bei bestimmungsgemäßem Gebrauch wird ein plattenförmiger Körper derart in das Einlegeprofil eingelegt, dass der erste Schenkel an einer Oberseite des plattenförmigen Körpers aufliegt. Vorliegend wird unter Oberseite die Fläche des plattenförmigen Körpers verstanden, die bei bestimmungsgemäßem Gebrauch von einer Gebäude- bzw. Dachfläche wegweist.

Die Nut weist bevorzugt einen, dem ersten Schenkel zugewandten Rücksprung zur Aufnahme eines L-förmigen Vorsprungs einer korrespondieren Feder auf. Ferner ist auf einer dem Rücksprung gegenüberliegenden Seite der Nut bevorzugt ein Vorsprung zum Eingriff in eine Rille einer korrespondierenden Feder angeordnet.

Mit besonderem Vorteil weist das erfindungsgemäße Einlegeprofil in einer weiter bevorzugten Ausgestaltung einen auf einer dem ersten Schenkel abgewandten Seite des zweiten Schenkels, insbesondere als Kastenprofil oder Strukturelement ausgebildeten Körper auf, welcher sich in Erstreckungsrichtung des Einlegeprofils erstreckt. Bevorzugt weist der Körper einen rechteckigen Querschnitt auf, wobei die Nut zwischen zweitem Schenkel und einer zum zweiten Schenkel benachbarten Oberseite des Körpers ausgebildet ist. Bei Anordnen des erfindungsgemäßen Montageelements derart, dass der Eingriffsabschnitt in die Nut eingreift, bietet der Körper des Einlegeprofils eine Auflagefläche für die Seitenfläche des Hubkörpers und ist somit ausgebildet den Hubkörper des Montagelements gegen Verkippen zu stabilisieren. Somit ist gewährleistet, dass der plattenförmige Körper, also das Modul ohne Verkippung und vielmehr plan ausgerichtet im Einlegeprofil verklemmt wird.

In einer weiter bevorzugten Ausgestaltung des erfindungsgemäßen Einlegeprofils ist vorgesehen, dass auf einer der Nut abgewandten Seite des Körpers ein Rücksprung angeordnet ist. Der Rücksprung weist auf einer der Nut abgewandten Seite eine Rille auf und dient der Ausbildung eines Rastmechanismus mit einem korrespondierenden Vorsprung. Dieser korrespondierende Vorsprung ist bevorzugt in einer Unterkonstruktion angeordnet, so dass das Einlegeprofil bevorzugt mittels des Rücksprungs eine formschlüssige Verbindung mit einer Unterkonstruktion ausbildet.

Bevorzugt entspricht das Profil des Rücksprungs dem Negativ der an einem erfindungsgemäßen Montageelement ausgebildeten Feder. Der Rücksprung ist somit als zusätzliche Nut nutzbar, wobei deren Profil bevorzugt derart ausgebildet ist, dass es zur ersten Nut gespiegelt ausgerichtet ist. Das erfindungsgemäße Montageelement ist demnach derart in Funktion einer Nut in den Rücksprung einführbar, dass die Hubkörperoberseite von den Schenkeln des Einlegeprofils wegweist.

Der Rücksprung ist bevorzugt beidseits des rechteckigen Körpers ausgebildet. Somit ist das Einlegeprofil sowohl mittig, als auch im Randbereich, beispielsweise first- und traufseitig eines Montagesystems einsetzbar. Die nicht zur Arretierung in einer Unterkonstruktion genutzte Nut kann dann beispielsweise der Aufnahme eines Gegenstücks eines Abschlussprofils dienen.

Die Ausgestaltung des Rücksprungs in Form der Nut führt insbesondere in dieser Ausgestaltung dazu, dass ein Abschlussprofil sowohl in Längsrichtung, als auch in Querrichtung zum Einlegeprofil als Abschlussprofil nutzbar ist. Dies reduziert die Komplexität der zum Aufbau eines Montagesystems notwendigen unterschiedlichen Teile.

Ein weiterer Aspekt der Erfindung betrifft ein Montagesystem aufweisend zwei parallel zueinander angeordnete erfindungsgemäße Einlegeschienen zumindest ein erfindungsgemäßes Montageelement und mindestens einen flachen Körper, insbesondere ein Photovoltaikmodul, ein Fassadenelement, ein Dachelement oder ein Solarthermiemodul, wobei der flache Körper auf einer Hubkörperoberseite des Montageelements aufliegt, ein Eingriffsabschnitt (Feder) des Montageelements in eine Nut des Einlegemoduls eingreift und das Justierelement derart positioniert ist, dass ein Abstand zwischen Hubkörperoberseite und einer Unterseite des ersten Schenkels des Einlegprofils einer Höhe des Körpers entspricht.

Der Vorteil des Montagesystems besteht in der Kombination der Vorteile des erfindungsgemäßen Montageelements und des erfindungsgemäßen Einlegeprofils, welche in Kombination miteinander zudem eine notwendige Teilevielfalt innerhalb des Montagesystems reduziert.

In bevorzugter Ausgestaltung des erfindungsgemäßen Montagesystems ist vorgesehen, dass das Montagesystem ferner eine, insbesondere an einer/m Gebäudewand oder -dach angeordnete Unterkonstruktion aufweist, wobei der Rücksprung des Einlegeprofils in eine Feder der Unterkonstruktion eingreift.

Die beschriebenen Ausgestaltungen sind, soweit im Einzelfall nicht anders beschrieben, mit Vorteil miteinander kombinierbar.

Im Folgenden wird die Erfindung unter Bezugnahme auf Figuren anhand bevorzugter Ausführungsformen exemplarisch beschrieben.

Es zeigen:
- Figur 1A:: eine schematische Zeichnung eines erfindungsgemäßen Montageelements in einer bevorzugten Ausführungsform in schräger Aufsicht und in Frontalsicht, bei minimalem Hub,
- Figur 1B:: eine schematische Zeichnung eines erfindungsgemäßen Montageelements in der bevorzugten Ausführungsform in schräger Aufsicht und in Frontalsicht, bei maximalem Hub,
- Figur 2A:: eine schematische Zeichnung eines erfindungsgemäßen Montagesystems in einer bevorzugten Ausführungsform in schräger Aufsicht, bei minimalem Hub des Montageelements,
- Figur 2B:: eine schematische Zeichnung eines erfindungsgemäßen Montagesystems in der bevorzugten Ausführungsform in schräger Aufsicht, bei maximalem Hub des Montageelements,
- Figur 3A:: eine schematische Zeichnung eines erfindungsgemäßen Einlegeprofils in einer bevorzugten Ausgestaltung, mit darin angeordnetem Montageelement in der bevorzugten Ausführungsform in Querschnitt, bei minimalem Hub des Montageelements, und
- Figur 3B:: eine schematische Zeichnung eines erfindungsgemäßen Einlegeprofils in der bevorzugten Ausgestaltung, mit darin angeordnetem Montageelement in der bevorzugten Ausführungsform in Querschnitt, bei maximalem Hub des Montageelements.

Die drei Figuren zeigen je eine besonders bevorzugte Ausgestaltung des erfindungsgemäßen Montageelements 10, des erfindungsgemäßen Montagesystems 30, und des erfindungsgemäßen Einlegeprofils 20, wobei sich die Figurenteile A und B jeweils in der Position des Hubkörpers 11 und damit des erreichten Hubs unterscheiden.

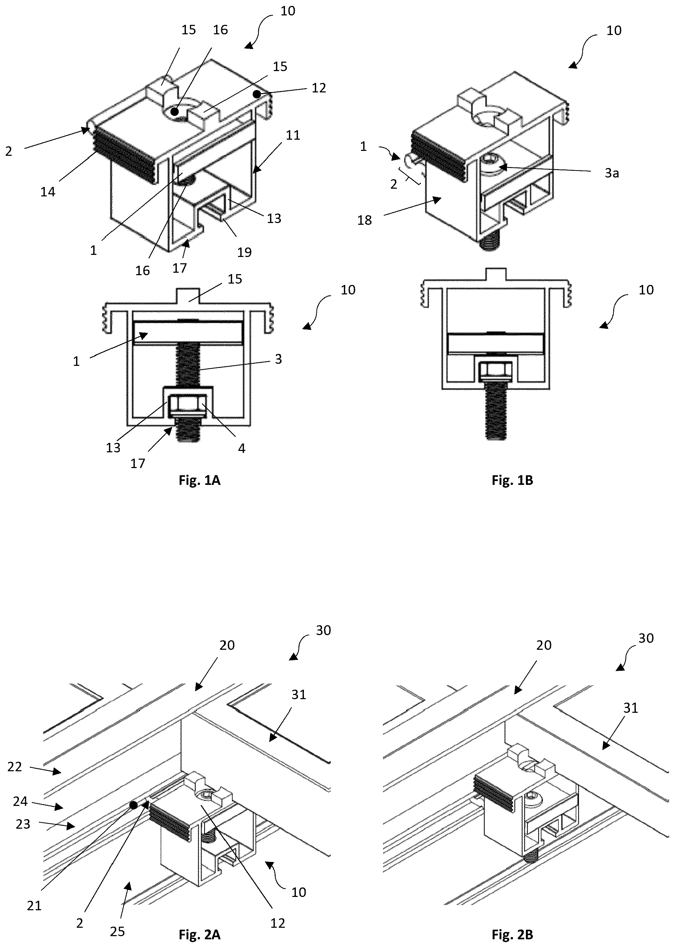

Figuren 1A und 1B zeigen das erfindungsgemäße Montageelement 10 in einer bevorzugten Ausgestaltung. Das Montageelement umfasst einen Hubkörper 11, der bevorzugt als Kastenkörper ausgestaltet ist und somit eine Hubkörperoberseite 12 eine Hubkörperunterseite 17 und zwei einander gegenüberliegende Seiten 18 aufweist. Die Hubkörperoberseite 12 weist, insbesondere mittig eine Durchgangsöffnung 16 zur Aufnahme eines Justierelements 3, beispielsweise einer Schraube auf. Die Durchgangsöffnung 3 weist bevorzugt einen Durchmesser auf, der geeignet ist alle Teile des Justierelements 3, also sowohl eine Gewindestange als auch einen Schraubenkopf 3a vollständig durch die Hubkörperoberseite 12 hindurchzuführen.

Der Hubkörper 11 kann auf der Hubkörperoberseite 17 einen Rücksprung 13 aufweisen, welcher bevorzugt einen Überstand 19 ausgebildet hat. Der Überstand ist dabei bevorzugt als Verlängerung der Hubkörperunterseite 17 ausgebildet.

Optional weist der Hubkörper 11 an den Hubkörperseiten 18 einen profilierten Abschnitt auf, bzw. ist beabstandet dazu ein profilierter Abschnitt 14 ausgebildet. Dieser ist auf einem zur Hubkörperoberseite 12 benachbarten Bereich der Hubkörperseiten 18 angeordnet und weist mehrere insbesondere parallel verlaufende Erhebungen und Vertiefungen auf. Bevorzugt weisen die entstehenden Rillen einen Hinterschnitt auf, sodass mit einem geeigneten Gegenprofil eine Rastverbindung ausgebildet werden kann. Bevorzugt ist der profilierte Abschnitt 14 beidseits des Hubkörpers 11 angeordnet.

Ferner weist das erfindungsgemäße Montageelement 10 eine Klemmplatte 1 auf, welche sich in der gezeigten Ausgestaltung durch den Hubkörper 11 hindurch erstreckt und parallel zur Hubkörperoberseite 12 ausgerichtet ist. Alternativ ist die Klemmplatte 1 ein unterhalb des Hubkörpers 11, also benachbart zur Hubkörperunterseite 17 außerhalb des Kastenkörpers angeordnet. Erfindungsgemäß überragt ein Eingriffsabschnitt 2 der Klemmplatte 1 eine Flucht des Hubkörpers 11, tritt also aus diesem heraus, oder unter diesem hervor. Der Eingriffsabschnitt 2 ist bevorzugt nicht plan ausgeführt. Vielmehr ist bevorzugt, dass am Ende der Klemmplatte 1 im Bereich des Eingriffsabschnitts 2 eine nicht plattenförmige Ausformung angeordnet ist. Diese kann beispielsweise in einer Erhebung, einer Abwinkelung der Platte 1 oder Ähnlichem bestehen. Ferner kann vorgesehen sein, dass die Klemmplatte 1 im Bereich des Eingangsabschnitts 2 weitere Erhebungen und/oder Vertiefungen aufweist, welche sich insbesondere über die gesamte Breite der Klemmplatte 1 im Bereich des Eingangsabschnitts 2 erstrecken. Ferner weist die Klemmplatte 1 eine Durchgangsöffnung zur Aufnahme des Justiermittels 3 auf. Dabei ist der Durchmesser der Durchgangsöffnung der Klemmplatte 1 kleiner als die Durchgangsöffnung 16 in der Hubkörperoberseite 12. Vielmehr weist die Durchgangsöffnung der Klemmplatte 1 einen Durchmesser auf, der zwar die Gewindeachse einer Schraube, aber nicht deren Schraubenkopf 3a aufnehmen kann. Die Klemmplatte 1 ist derart im Hubkörper 11 angeordnet, dass die Durchgangsöffnung der Klemmplatte 1 fluchtend mit den beiden Durchgangsöffnungen 16 in der Hubkörperoberseite 12 und der Hubkörperunterseite 17 ausgerichtet sind.

Bevorzugt weist das erfindungsgemäße Montageelement 10 ein Justierelement 3, insbesondere in Form einer Schraube auf. Das Justierelement 3 erstreckt sich mittig durch den Hubkörper 11 und steht dabei in Wirkverbindung mit dem Hubkörper 11 und der Klemmplatte 1.

Das Justierelement 3 greift in einem zu Hubkörperunterseite 17 benachbarten Bereich in ein geeignetes Gegenstück 4 ein, welches ein Gewinde aufweist. Das Gegenstück 4 ist bevorzugt als Mutter, insbesondere als selbstsichernde Mutter, oder aber als Gewindeplatte, bevorzugt mit einem zur Selbstsicherung oder als elastischem Puffer geeigneten Kunststoff ausgeführt.

Das erfindungsgemäße Montageelement 10 hat die Funktion, dass durch Betätigung des Justierelements 3 die Position der am Ende des Justierelements 3 anliegenden Klemmplatte 1 in Bezug auf die Position im Kastenkörper des Hubkörpers 11 veränderbar ist. Durch die Veränderung der Position der Klemmplatte 1 durch Betätigung des Justierelements 3, also durch Hineinschrauben oder Herausdrehen des Justierelements 3 in die Hubkörperunterseite 17 bzw. das daran angeordnete Gegenstück 4 wird ein Abstand zwischen der Klemmplatte 1 und der Hubkörperoberseite 12 insbesondere stufenlos veränderbar.

In Figur 2A und 2B ist ein erfindungsgemäßes Montagesystem 30 gezeigt, welches das in den Figuren 1 beschriebene erfindungsgemäße Montageelement 10 aufweist. Dieses greift über den Eingriffsabschnitt 2 in eine Nut 21 eines Einlegeprofils 20 ein. Auf der Hubkörperoberseite 12 des Montageelements 10 liegt ein Fassadenelement 31 auf, welches in der gezeigten Ausgestaltung als Photovoltaikmodul 31, oder Solarthermiemodul 31 ausgeführt ist. Die Figuren 2A und 2B unterscheiden sich dabei in der Rahmenhöhe des im Einlegeprofil 20 einzulegenden Moduls 31.

In der Ausgestaltung der Figur 2, welche die Anordnung eines Moduls 31 mit sehr hohem Rahmen zeigt, ist das Justierelement 3 des Montageelements 10 derart ausgerichtet, dass die Klemmplatte 1 an der Hubkörperoberseite 12 anliegt und mithin der Hub des Montageelements 10 minimal ist. Die Ausgestaltung des Montagesystems 30 in der Figur 2B hingegen zeigt ein Modul 31 mit sehr kleiner Rahmenhöhe, sodass ein maximaler Hub des Montageelements 10 erforderlich ist. Dies ist erreichbar, indem das Systemelement 3 vollständig in Richtung Hubkörperunterseite 17 eingetreten ist und somit die Klemmplatte 1 die Hubkörperunterseite 17, zumindest im Bereich des Rücksprungs 13 kontaktiert.

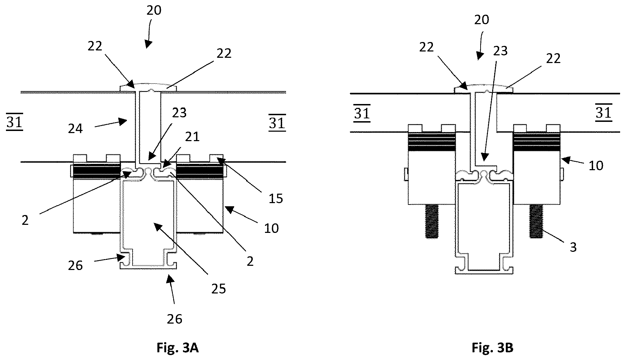

Die Figuren 3A und 3B zeigen den Querschnitt eines erfindungsgemäßen Einlegeprofils 20 mit im Einlegeprofil 20 angeordnetem Montageelement 10 und Modul 31.

Dass Einlegeprofil 20 weist einen zumindest U-förmigen Querschnitt auf. Dieser umfasst einen ersten Schenkel 22 und einen zweiten Schenkel 23, welche über einen Steg 24 miteinander verbunden sind. Bevorzugt erstreckt sich der zweite Schenkel 22 über den Steg hinaus, sodass auf der des zunächst beschriebenen U-förmigen Querschnitts benachbarten Seite des Stegs 24 eine L- oder weitere U-Formung entsteht. Auf einer vom Steg 24 abgewandten Seite des zweiten Schenkels 23 ist eine Nut 21 ausgebildet, welche derart ausgeformt ist, dass sie ein Negativ für den Eingriffsabschnitt 2 der Klemmplatte 1 darstellt. Somit fungiert der Eingriffsabschnitt 2 das Montageelement als Feder für die Nut 21 des Einlegeprofils 20.

Bevorzugt weist das Einlegeprofil 20 einen rechteckigen geschlossenen Körper, bzw. Profilquerschnitt 25 auf, welcher sich ausgehend vom zweiten Schenkel 23 erstreckt. An beiden dem zweiten Schenkel 23 abgewandten Seiten des rechteckigen Körpers 25 ist bevorzugt ein Rücksprung 26 angeordnet, welcher bevorzugt ebenfalls ein Negativ für den Eingriffsabschnitt 2 der Klemmplatte 1 des Montageelements 10 darstellt. Dieser Rücksprung 26 erstreckt sich ebenso wie die Nut 21 über die gesamte Länge des Einlegeprofils 20 und stellt somit eine Längsnut dar.

### Bezugszeichenliste

- 10: Montageelement

- 1: Klemmplatte
- 2: Eingriffsabschnitt/ Feder
- 3: Justierelement/ Schraube
- 3a: Schraubenkopf
- 4: Gegenstück für das Justiermittel/ Mutter/ Selbstsichernde Mutter

- 11: Hubkörper
- 12: Hubkörperoberseite
- 13: Rücksprung
- 14: profilierter Abschnitt
- 15: Vorsprung/ Erhebung/ Nase
- 16: Durchgangsöffnung
- 17: Hubkörperunterseite
- 18: Hubkörperseite

- 20: Einlegeprofil
- 21: Nut
- 22: erster Schenkel
- 23: zweiter Schenkel
- 24: Steg
- 25: rechteckiger Körper
- 26: Rücksprung
- 27: Profil/Längsnut
- 30: Montagesystem
- 31: plattenförmiger(flacher) Körper/ Fassadenelement/ Solarmodul/ Photovoltaikmodul/ Solarthermiemodul/ Modul

## Patentansprüche

1. Montageelement (10) zum Fixieren eines plattenförmigen Körpers (31) in einem Einlegeprofil (20), das Montageelement (10) aufweisend
- eine Klemmplatte (1),
- einen Hubkörper (11) mit einer Hubkörperoberseite (12), die ausgebildet ist eine Unterseite eines plattenförmigen Körpers (31) aufzunehmen, und
- ein Justiermittel (3), welches mit dem Hubkörper (11) und der Klemmplatte (1) in Wirkverbindung steht, durch dessen Verstellung ein Abstand zwischen Klemmplatte (1) und Hubkörperoberseite (12) variierbar ist,
wobei die Klemmplatte (1) an einer ersten Seite (18) des Hubkörpers (11) außerhalb einer Flucht des Hubkörpers (11) einen Eingriffsabschnitt (2) aufweist, der ausgebildet ist in eine Längsnut (21) eines Einlegeprofils (20) einzugreifen.

2. Montageelement (10) nach Anspruch 1, wobei das Justiermittel (3) ein Gewinde und ein, insbesondere selbstsicherndes Gegenstück (4) aufweist.

3. Montageelement (10) nach einem der vorhergehenden Ansprüche, auf der Hubkörperoberseite (12) ein Abstandselement (15), insbesondere in Form einer Erhebung oder eines Vorsprungs ausgebildet oder angeordnet ist.

4. Montageelement (10) nach einem der vorhergehenden Ansprüche, wobei der Hubkörper (11) einen Kastenkörper aufweist oder aus einem solchen besteht, dessen Oberseite (12) eine Durchgangsöffnung (16) zur Aufnahme, insbesondere Durchführung des Justiermittels (3) aufweist.

5. Montageelement (10) nach Anspruch 4, wobei eine gegenüber der Hubkörperoberseite (12) angeordnete Hubkörperunterseite (17) einen Rücksprung (13) mit einer Durchgangsöffnung zur Aufnahme des Justiermittels (3) aufweist.

6. Montagelement (10) nach einem der vorhergehenden Ansprüche, wobei eine zur ersten Seite (18) benachbarten Seite des Hubkörpers (11) in einem zur Hubkörperoberseite (12) benachbarten Abschnitt ein Profil (14) aufweist, welches insbesondere parallel zueinander und zur Hubkörperoberseite (12) verlaufende Erhebungen und Vertiefungen aufweist.

7. Einlegeprofil (20) aufweisend einen längserstreckten Körper mit U-förmigem Querschnitt mit einem ersten und einem zweiten Schenkel (22, 23), wobei an dem zweiten Schenkel (23) zumindest eine Längsnut (21) zur Aufnahme eines Eingriffsabschnitts (2) ausgebildet ist.

8. Einlegeprofil (20) nach Anspruch 7, ferner aufweisend einen auf einer dem ersten Schenkel (22) abgewandten Seite des zweiten Schenkels (23), insbesondere als Kastenprofil oder Strukturelement ausgebildeter Körper (25), welcher sich in Erstreckungsrichtung des Einlegeprofils (20) erstreckt, dessen Querschnitt eine rechteckige Form aufweist, wobei die Nut (21) zwischen zweitem Schenkel (23) und einer zum zweiten Schenkel (23) benachbarten Oberseite des Körpers ausgebildet ist.

9. Einlegeprofil (20) nach Anspruch 8, wobei auf einer der Nut (21) abgewandten Seite des Körpers (25) ein Rücksprung (26) angeordnet ist, dessen Profil einem Negativ des Querschnitts des Eingriffsabschnitts (2) eines Montageelements (10) nach einem der Ansprüche 1 bis 6 entspricht.

10. Montagesystem (30) aufweisend zwei parallel zueinander angeordnete Einlegeprofile (20) nach einem der Ansprüche 7 bis 9, zumindest ein Montageelement (10) nach einem der Ansprüche 1 bis 6, mindestens ein plattenförmiger Körper (31), insbesondere ein Photovoltaikmodul, ein Fassadenelement, ein Dachelement oder ein Solarthermiemodul, wobei der plattenförmige Körper (31) auf einer Hubkörperoberseite (12) des Montageelements (10) aufliegt, eine Feder (2) des Montagelements (10) in eine Nut (21) des Einlegemoduls (20) eingreift und das Justierelement (3) derart positioniert ist, dass ein Abstand zwischen Hubkörperoberseite (12) und einer Unterseite des ersten Schenkels (22) des Einlegprofils (20) einer Höhe des plattenförmigen Körpers (31) entspricht.

11. Montageelement (30) nach Anspruch 10, ferner aufweisend eine an einer/m Gebäudewand oder-dach angeordnete Unterkonstruktion, wobei der Rücksprung (26) des Einlegeprofils (20) in eine Feder der Unterkonstruktion eingreift (die dafür bestimmungsgemäß eingesetzte Klemmplatte mit Eingriffsabschnitt / Feder (2) ist baugleich der Klemmplatte (1) des Montageelements (10) -> verringert Teilevielfalt, kosteneinsparend) .
